# EUROPEAN PATENT APPLICATION

(11) **EP 2 362 358 A1**
(43) Date of publication of application: **31.08.2011**
(21) Application number: 10154296.7
(22) Date of filing: 22.02.2010
(51) Int. Cl.: G07C 5/08

(54) **A digital tachograph and a method therefore**

(71) Applicant: Stoneridge Electronics AB, 16102 Bromma (SE)
(72) Inventor: Öhlund, Dan, SE-17763 Järfälla (SE)
(74) Representative: Estreen, Lars J.F.

(57) **Abstract**

The present invention relates to a tachograph comprising user identification interface for cryptographically secured *communication* with a user module and means for identifying a user module connected to the user identification interface. The invention introduces cargo communication means for communicate, wired or wireless, and store cargo related data concerning cargo which is related to the vehicle in which the tachograph is installed. Further the tachograph comprises cargo user identification means for associate said cargo related data to an identified user module.

## Description

### FIELD OF INVENTION

The present invention relates generally to digital tachographs, and particularly to a digital tachograph comprising interfaces and functions for handling cargo and trailers.

### BACKGROUND

Digital tachographs are like analogue tachographs used for gathering information relating to the usage of a vehicle, and to collection of driver activities, such as driving hours, distance traveled, start time, finish time, rest time, driver name, starting location and finishing location. Tachograph registers and saves actions and data and associates them to the identified driver, time and place. In Europe a digital tachograph is partly defined by European Community legislation.

The existing tachograph of today does not handle all information that could be of importance for the driver, the owner of the vehicle or the public. The aim of the invention is to provide such a tachograph.

### SUMMARY OF THE INVENTION

An object of the present invention is to provide a tachograph for facilitating handling information related to a vehicle.

This object, among others, is according to the present invention attained by a digital tachograph as defined by the appended claims.

According to the present invention, a tachograph comprising user identification interface for cryptographically secured communication with a user module and means for identifying a user module connected to the user identification interface. The invention introduces cargo communication means for communicate, wired or wireless, and store cargo related data concerning cargo which is related to the vehicle in which the tachograph is installed. Further the tachograph comprises cargo user identification means for associate said cargo related data to an identified user module.

The cargo related data can e.g. comprise data related to specific items, cluster of several items or the physical area used for storing cargo.

The tachograph further comprises cargo user identification means for associate said cargo related data to an identified user module.

In different embodiments, as defined by the claims, the tachograph comprises several functions related to handling of data. A memory for storing data, interfaces for communication of cargo related data and different sensors are included in some of the embodiments. In one particular embodiment the communication of cargo related data is cryptographically secured.

One advantage of the invention is that already existing security functions in the tachograph can be used for handling cargo related data.

### BRIEF DESCRIPTION OF THE DRAWINGS

The present invention will become more fully understood from the detailed description of embodiments given below and the accompanying figures, which are given by way of illustration only, and thus, are not limitative of the present invention, wherein:

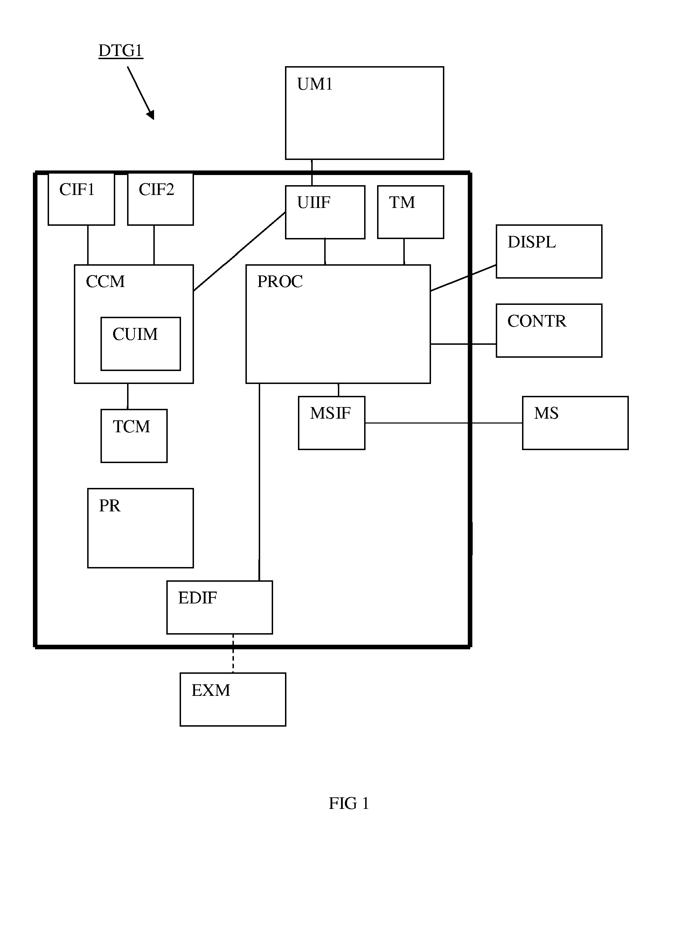

Fig. 1 schematically illustrates a digital tachograph according to the present invention.

### DETAILED DESCRIPTION OF EMBODIMENTS

Embodiments of a digital tachograph according to the present invention will now be described with reference to Fig. 1.

Fig 1 illustrates a tachograph according to the invention. The digital tachograph DTG1 comprises a control function (PROC) suitable for handling functions in the tachograph. It could be a main processor or a distributed system. It could also comprise memories of different kind. The tachograph is handled via a user interface comprising control knobs or buttons (CONTR) and a display (DISPL). Those could be integrated in the tachograph or be situated externally via an interface. The control function could also comprise a real time clock and arithmetic unit suitable for calculation of e.g. driving times.

A digital tachograph could also comprise means for encryption and signing of user related data. Driver related data such as driving times, speed of the vehicle, rest time for the driver etc can then be securely handled and stored by the tachograph. The same security means could also be used for handle cargo and freight related data in a secure way.

In this embodiment a tachograph memory (TM) is situated outside the control function. In this memory user related data could be stored, e.g. speed of vehicle, time of driving etc. It could also be used to store cargo and freight related data.

The tachograph also comprises a motion sensor interface MSIF suitable for encrypted data communication of information related to the motion of the vehicle. A motion sensor MS could be situated in the gearbox or the wheels of the vehicle and give signals about the speed of the vehicle. There could be several motions sensors and other solutions could be GPS, magnetic compass sensors or satellite signals. The tachograph can encrypt data from the motion sensor and transform the signals to speed of the vehicle.

The tachograph also comprises a user identification interface UIIF suitable for cryptographically secured data communication with a user module. The tachograph also has means for identifying a user module connected to the user identification interface. The user module could be in form of a smart card belonging to a special user and could comprise a memory for storing user related data. An identification key is stored in the smart card and is used by the tachograph to identify the user module. In this way the user of the tachograph, and therefore also the vehicle, can be securely identified. This identification system can then be used also for identify a user of the tachograph that handles cargo.

The tachograph further comprises an external data communication interface (EDIF) suitable for encrypted data communication with an external memory (EXM). This could be used for download data stored in the tachograph memory and/or on the user module.

The tachograph also comprises cargo communication means CCM for communicate and store cargo related data related to the vehicle in which the tachograph is installed. Cargo could mean several things. Either it is a specific sample of a piece of cargo, e.g. a book or a box of several books. The cargo could also be distributed on several pieces but handled as one cargo. In some circumstances a whole trailer connectable to a vehicle could be seen as a cargo. Cargo related data could mean anything related to the cargo and the freight, e.g. temperature of cargo, speed of the cargo, load status of the cargo, unload procedures necessary for the cargo, weight and dimensions of the cargo area, e.g. the trailer. The cargo data could be store in a dedicated memory TCM, even an external one, or in a memory TM that also stores other user related data.

The tachograph can communicate cargo related information via the interfaces CIF1 or CIF2. Those interfaces could be user interface for manual input of cargo data, interfaces for connection to a computer, bar code readers etc. The interfaces could also be wireless. In one particular embodiment the user interface for the user related data DISPL, CONTR could be used to handle cargo related data. Also a printer could be used to print out cargo related data, e.g. a route description for the transportation of cargo or an access code for the cargo area. Cargo data could be stored in dedicated cargo memory or another other memory that could be used as a cargo memory.

The tachograph also comprises cargo user identification means CUIM for associate said cargo related data to an identified user module. This makes it possible to only let certain users or group of users to handle certain cargos in a certain way. Cargo related data, such as unload of cargo, temperature of cargo, etc could be associated to an identified user. This gives possibilities to authorize certain users to handle certain cargo as well as register which user that has been involved in handling the cargo.

For example, an identified user could load cargo on the vehicle and registered the action in the tachograph. The tachograph associates the user to the cargo and vehicle. The user will later unload the cargo at a certain place and that will also be registered by the tachograph. All this load and unload of cargo can be displayed or downloaded for later use. During a drive certain data could be registered, e.g. the temperature of the cargo and/or the speed of the vehicle. If the tachograph has a warning system for to low temperature or high speed, warnings could be displayed. The occurrence of a warning could also be registered together with the identified user, a driver in this case. It could also be possible to authorize only certain user to handle cargo, e.g. certain drivers are not allowed to drive certain types of cargo or unload certain types of cargo. Cargo related data are registered and associated to a user. The security system of the tachograph makes the information reliable.

Cargo related data could be put into the tachograph in several ways, manually via an interface, wired interfaces, wireless interfaces etc. Examples of wired interfaces that already exist today are CAN-interface, RS232 serial interface, LIN and RS-485. Wireless solution comprising near field communication are possible to receive data from the cargo or cargo area. The vehicle or trailer could comprise an antenna for receiving cargo related data from an active or passive wireless transmitter device, for example a RFID-tag, fitted to the cargo. The registration of cargo related data could then be fully automatic.

All kind of sensors could be used to collect cargo related data. Sensor devices can sense for example:
- cargo identify numbers
- temperature,
- gas concentration,
- humidity,
- pressure
- weight
- total weight of a cargo area, e.g. a trailer
- G-forces
- location of the cargo or vehicle, e.g. by using GPS data

All the communication could be cryptographically secured in case of sensitive data. The security system of the tachograph can be used to handle cargo related data. All communication could be encrypted by using already existing encryption systems in tachographs. Data could be signed and reliable related to an identified user.

For example, a user identifies himself with a user module. This is done by a secure connection to the tachograph and an identification key on the user module. The tachograph recognizes the identified user and authorizes him to access certain cargo related data, e.g. the route he has to drive for transportation of the cargo. When the cargo arrives at is final destination the user mark the cargo as unload in the tachograph. The information is signed to the user and stored securely in the tachograph and/or on the user module. It is also stored the temperature of the cargo area and the speed of the vehicle during the transportation. This data can late be reviewed for control. By using the existing security solutions for user related data in the tachograph, the cargo related data will also be reliable and securely stored.

All kind of data that in some way related to the cargo is called cargo related data. User and driver related data could be included. The position of the cargo, from e.g. a GPS function could keep track of the position of the vehicle and the cargo area.

The cargo related data could also comprise recommended value for e.g. storage temperature, light intensity, humidity, forces, weight or gas concentrations. These values could be displayed to the user. Sensors in the cargo area or on the cargo itself could display actual value. The tachograph could compare a recommended value, e.g. temperature or speed of vehicle, related to a cargo with an actual value related to said cargo and calculate a difference value. This difference value could be used for alarm systems or similar functions. This data could be associated to an identified user module and stored in a memory for later use.

The user described could be the driver of the vehicle but also other persons like service personal etc.

It will be obvious that the present invention may be varied in a plurality of ways. Such variations are not to be regarded as departure from the scope of the present invention as defined by the appended claims. All such variations as would be obvious for a person skilled in the art are intended to be included within the scope of the present invention as defined by the appended claims.

## Claims

1. A digital tachograph suitable for being installed in a vehicle comprising:
- a user identification interface (UIIF) suitable for *cryptographically secured data communication* with a user module (UM1)
- means for identifying a user module connected to the user identification interface,
**characterized in that** the tachograph further comprises:
- cargo communication means (CCM) for communicate, wired or wireless, and store cargo related data concerning cargo which is related to the vehicle in which the tachograph is installed, said cargo related data can e.g. comprise data related to specific items, cluster of several items or the physical area used for storing cargo.
- cargo user identification means (CUIM) for associate said cargo related data to an identified user module

2. A tachograph according to claim 1 comprising means for storing the cargo related data associated to an identified user module in a tachograph cargo memory (TCM) and/or in a user cargo memory integrated in a user module

3. A tachograph according to any of the preceding claims whereas the cargo communication means comprises a external memory interface for connection to an external cargo memory for storing cargo related data associated to the identified user module

4. A tachograph according to any of the preceding claims comprising at least one user interface (CONTR, DISPL), or an interface for data communication with a user interface, said user interface comprises a display and/or controls for displaying and/or handling user related data and/or cargo related data.

5. A tachograph according to any of the preceding claims comprising a printer (PR), or an interface for data communication with a printer, for printing out user related data and/or cargo related data.

6. A tachograph according to any of the preceding claims whereas the cargo communication means comprises at least one of the following interfaces (CIF1, CIF2) for communication of cargo related data:
- a user interface for input and output of cargo related data
- a bar code reader interface for reading bar codes comprising cargo related data,
- a wired interface for communication of cargo related data, e.g. RS-232, RS-485, LIN, K-Line or CAN
- a wireless interface for communication of cargo related data, e.g. Bluetooth, RFID, mobile phone standards such as GSM or 3G, IR light, WLAN, microphone and a voice recognition system,
- a sensor interface, wired or wireless, for connection to a sensor for receiving cargo related data,

7. A tachograph according to claim 6 whereas said sensor interface, which can be situated e.g. in a cargo area or on a specific cargo, can communicate at least one of the following cargo related data:
- cargo identity number
- temperature,
- gas concentration,
- humidity,
- pressure
- weight
- total weight of a cargo area, e.g. a trailer
- G-forces
- location of the cargo or vehicle, e.g. by using GPS data

8. A tachograph according to claim 6 or 7 configured for cryptographically secured communication via said interfaces.

9. A tachograph according to any of the preceding claims where the cargo related data comprises at least one component from one of the three groups below:
- speed of the vehicle, geographical area, time, driving time;
- recommended and/or actual: storage temperature, light intensity, humidity, forces, weight, gas concentrations, geographical area;
- load/unload status of cargo,

10. A tachograph according to any of the preceding claims comprising means for comparing a recommended value, e.g. temperature or speed of vehicle, related to a cargo with an actual value related to said cargo and calculate a difference value

11. A tachograph according to claim 10 comprising means for store the difference value and associate the difference value to an identified user module

12. A tachograph according to claim 11 comprising means for store the difference value on the identified user module, the cargo tachograph memory or an external cargo memory

13. A tachograph according to any of claim 10 to 12 comprising means for display the difference value and/or alarm if the difference differ from a certain threshold value

14. A tachograph according to any of the preceding claims comprising and encryption unit and/or a decryption unit for encrypt and/or decrypt driver related data and/or cargo related data

15. A tachograph according to any of the preceding claims comprising means for authorization the user of a user module to handle cargo related data

16. A tachograph according to any of the preceding claims comprising means for signing user related data and/or cargo related data and store said signed data on a memory.

17. A tachograph according to any of the preceding claims comprising at least one sensor connected to the cargo communication means, said sensor reading at least one of the following data:
- cargo identity number
- temperature,
- gas concentration,
- humidity,
- pressure
- weight
- total weight of a cargo area, e.g. a trailer
- G-forces
- location of the cargo or vehicle, e.g. by using GPS data
